# EUROPÄISCHE PATENTSCHRIFT

(11) **EP 0 790 166 B1**
(45) Veröffentlichungstag und Bekanntmachung des Hinweises auf die Patenterteilung: **29.05.2002**
(21) Anmeldenummer: 97250001.1
(22) Anmeldetag: 08.01.1997
(51) Int. Cl.: B60T 17/20, B60T 17/08, B60T 13/38

(54) **Feststellbremse für Schienenfahrzeuge, insbesondere für Güter- und Personenwagen**
Parking brake for railway vehicles, especially for freight and passenger vehicles
Frein de stationnement pour véhicules ferroviaires, notamment pour wagons de marchandises et de voyageurs

(30) Priorität: 11.01.1996 DE 19601945
(43) Veröffentlichungstag der Anmeldung: 20.08.1997
(73) Patentinhaber: Knorr-Bremse MRP Systeme für Schienenfahrzeuge GmbH & Co. KG, 30453 Hannover (DE)
(72) Erfinder: Kemner, Axel, 30916 Isernhagen (DE); Lehnert, Erhard, 31311 Uetze (DE)

(56) Entgegenhaltungen:
- EP-A- 0 457 030
- DE-A- 2 205 549
- GB-A- 1 280 275
- US-A- 3 183 791
- US-A- 4 080 875

## Beschreibung

Die Erfindung betrifft eine Feststellbremse für Schienenfahrzeuge, insbesondere für Güterund Personenwagen, mit einer mechanischen Verriegelung zur Verhinderung einer ungewollten Betätigung der Bremse, gemäß Oberbegriff des Patentanspruches 1.

Eine derartige Feststellbremse ist aus der US 3,183,791 bekannt. Die Feststellbremse ist mit einer mechanischen Verriegelung zur Verhinderung einer ungewollten Betätigung der Bremse ausgerüstet. Die Verriegelung umfasst einen in Betätigungsrichtung segmentiert ausgeführten Konus, der einen Kugelkalottenverlauf aufweist, welcher zur Verriegelung mit diversen Kugelelementen zusammenwirkt. Der Konus dient zur Betätigung der Kugelelemente, wobei die Betätigung derart erfolgt, dass bei fehlender pneumatischer Energie die Verriegelung entriegelt und so die Energie eines Federspeichers zur Bremsung freisetzbar ist. Der Federspeicher ist als Kolbenzylinderaggregat ausgebildet, bei welchem der Kolben samt Kolbenstange in Betätigungsrichtung der Bremse von einer Druckfeder und in Löserichtung der Bremse von einem Druckmittel beaufschlagbar ist.

Feststellbremsen für Schienenfahrzeuge sind in der Regel als Handbremsen mit handbetätigten Spindelantrieben ausgebildet. Solche Feststellbremsen sind bei Güter- oder Personenwagen zusätzlich zu den üblichen Betriebsbremsen vorgesehen. Sie dienen dabei lediglich der Verhinderung des Wegrollens von im Rangierbereich abgestellten Güter- oder Personenwagen. Sie dienen dabei nicht als Betriebsbremse. Im Alltagseinsatz zeigt sich, daß die Betätigung der spindelbetriebenen Handbremsen für den Rangierer erheblich aufwendig ist. Es ist dabei notwendig, die Feststellbremse eines jeden einzelnen Wagens von Hand zu betätigen.

Aus sicherheitstechnischen Gründen waren diese Handbremsen bisher von der eigentlichen im Zugverband durchgeschleiften Hauptluftleitung pneumatisch signalunabhängig. Aus sicherheitstechnischen Gründen mußte nämlich verhindert werden, daß im Fahrbetrieb eine ungewollte Betätigung der Feststellbremse erfolgte. Im Schwerlastgüterverkehr sind bei den normalen Betriebsbremsen überdies Bremsen mit Gleitschutz, also mit Antiblockiersystem, im Einsatz. Von daher kann sich im Betriebsfalle eine ungewollte Betätigung der Feststellbremse, die ungeregelt bremst, katastrophal auswirken. Aus diesem Grund ist bisher die Feststellbremse als von der pneumatischen Signal- bzw. Hauptluftleitung völlig getrennte handgetätigte Bremse ausgebildet worden. Überdies sind mechanische Verriegelungen solcher Feststellbremsen auch vorgesehen, um zu verhindern, daß sich die Bremse im Fahrbetrieb oder ansonsten ungewollt in Bremsrichtung betätigt.

Der Erfindung liegt daher die Aufgabe zugrunde, eine Feststellbremse der gattungsgemäßen Art dahingehend weiterzubilden, daß sie zum einen ferngesteuert betätigbar ist und zum anderen eine ungewollte Betätigung während des normalen Fahrbetriebes ausgeschlossen wird.

Gelöst wird diese Aufgabe erfindungsgemäß mit den Merkmalen des Patentanspruchs 1.

Eine vorteilhafte Ausgestaltung der Erfindung ist im Anspruch 2 angegeben.

Kern der Erfindung besteht hierbei darin, zum einen eine Federspeicherbremse zu verwenden, die jedoch mit einem pneumatisch oder elektrisch betätigbaren Verriegelung versehen ist.

Durch die Verriegelung wird eine ungewollte Betätigung der Feststellbremse verhindert. Der Federspeicher ist als Kolbenzylinderaggregat ausgebildet, bei welchem der Kolben samt Kolbenstange in Betätigungsrichtung der Bremse von einer Druckfeder und in Löserichtung der Bremse von einem Druckmittel beaufschlagbar ist. Die Verriegelung ist mit der Kolbenstange des Kolbenzylinderfederspeichers kraftschlüssig verbunden. Weiterhin ist die Verriegelung mit einem weiteren Kolbenzylinderaggregat versehen, welches von erheblich kleinerem Durchmesser ist als das Kolbenzylinderaggregat des Federspeichers. Die Funktion und die daraus resultierenden Vorteile werden anhand der Zeichnung und der damit beschriebenen Funktionen deutlich.

Es zeigt:
- Fig. 1: Feststellbremse nebst pneumatischer Beaufschlagung.
- Fig. 2: Zustand gelöste Feststellbremse.
- Fig. 3: Zustand betätigte Feststellbremse.

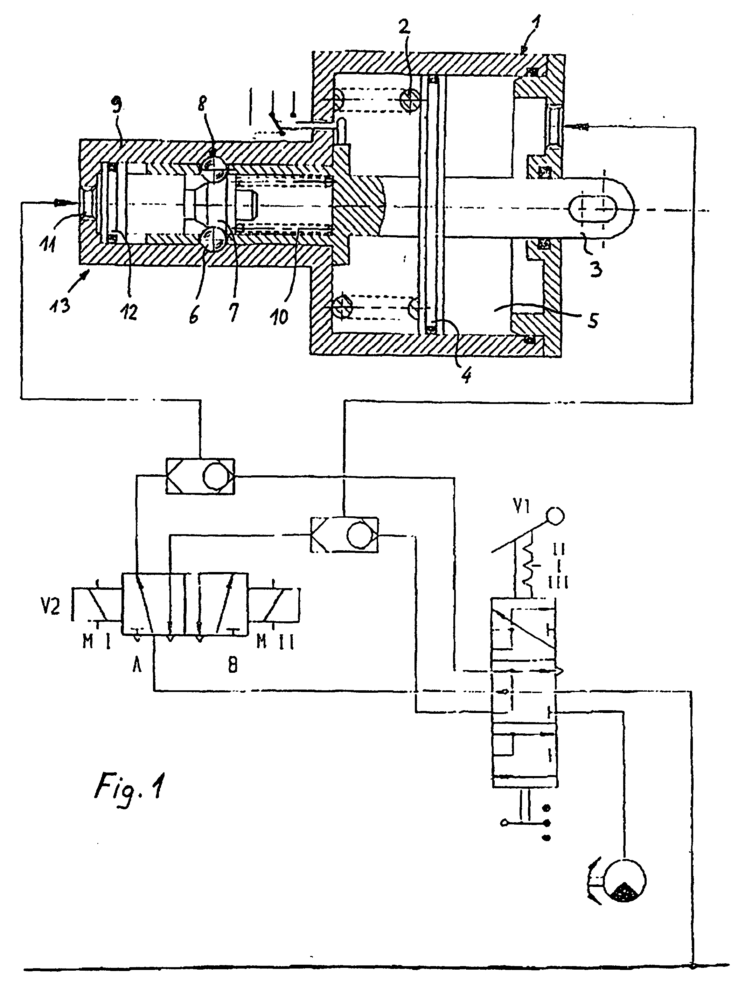

Fig. 1 zeigt die gesamte Anordnung der Feststellbremse nebst pneumatischer Beaufschlagung. Die Feststellbremse besteht dabei im Wesentlichen aus einem Kolbenzylinderaggregat (1), welches auf einer Seite mit einer Druckfeder (2) in Betätigungsrichtung der Bremse bzw. der nach außen geführten Kolbenstange (3) wirkt. Die Druckfeder wirkt dabei auf die Unterseite des Kolbens (4) des genannten Kolbenzylinderaggregates (1). Dieser ist mit der Kolbenstange (3) verbunden, die aus dem eigentlichen Druckraum (5) der Feststellbremse nach außen geführt ist und mit einer hier nicht weiter dargestellten Bremsmechanik verbunden ist. Desweiteren ist die Kolbenstange (3) in der linken oberen Bilddarstellung über den dort gezeigten Abschnitt hohl ausgebildet, wobei innerhalb der verlängerten Kolbenstange in diesem Bereich eine Verriegelung angeordnet ist. Diese ist im wesentlichen aus Kugeln (6), die in entsprechende komplementäre Ausformungen (8) des dort verlaufenden Gehäuses (9) eingreifen, gebildet. Die Kugeln (6) werden dabei über ein Konuselement (7) in Verriegelungsposition gehalten. Um diese Verriegelungsposition dauerhaft und auch pneumatisch unbetätigten Zustand zu halten, wird das Konuselement (7) über eine zweite kleinere Druckfeder (10) derart in Position gehalten, daß Kugelkalottenabschnitte des Konus (7) die Kugeln (6) dort in Position halten und die Kolbenstange (3) verriegeln. Wird nun über den links gezeigten Anschluß (11) pneumatische Energie impulsartig zugeführt, so wird der im Verriegelungsbereich angeordnete kleine Kolben (12) nach rechts verschoben und verschiebt den mit dem Kolben (12) kraftschlüssig verbundenen Konus (7) nach rechts entgegen der Kraft der kleineren Druckfeder (10). Dabei wirkt der zweite konische Abschnitt auf die Kugeln derart ein, daß die Kugeln (6) aus der Verriegelungsposition fallen und die Kolbenstange (3) freigeben. Um diese Verriegelung zu lösen, bedarf es nur eines kurzen pneumatischen Impulses auf den links dargestellten Anschluß (11). Ist die Verriegelung gelöst, so wirkt die Kraft der großen Druckfeder (2) als Druckspeicher und betätigt den Kolben (4) des Kolbenzylinderaggregates (1) der Federspeicherbremse und die Betätigungsstange (3) für die Feststellbremse fährt aus. Somit ist die Feststellbremse über die kurze signalartige pneumatische Beaufschlagung einfach ferngesteuert betätigbar. Die Verriegelung verhindert, daß die Federspeicherenergie ungewollt freigesetzt wird. Der Kern dieser neuartigen Feststellbremse besteht somit darin, daß eine gespeicherte Federenergie im verriegelten Zustand so lange gehalten wird, bis ein definiertes pneumatisches Signal vorliegt und die Federenergie freisetzt. Auch beim Ausfall der pneumatischen Energie, was bei abgestellten und geparkten Güter- und Personenwagen der Fall ist, bleibt diese Bremse aufgrund der Federspeicherenergie in betätigter Position. Um die Bremse wieder lösen zu können, ist sie dennoch in das pneumatische Hauptluftleitungssystem eines aus einzelnen Wagen zusammengestellten Zuges eingebunden, bzw. einbindbar. Das Hauptluftleitungssystem für die Betriebsbremse eines Zuges arbeitet nach der Logik, daß es im betätigten, bzw. im druckmittelbetätigten Zustand geöffnet und nicht geschlossen ist. Bei Wegfall der pneumatischen Energie sollen somit die Betriebsbremsen, nicht jedoch die Feststellbremse, betätigt werden. Dies wird dadurch erreicht, daß die Feststellbremse in dem Falle, sobald die Hauptluftleitung pneumatische Energie im Zugverband bereit stellt, über entsprechende Ventile, wie in Fig. 1 dargestellt, Druckmittel der stets belüfteten Hauptluftleitung auf den rechten Druckmittelanschluß der Feststellbremse gegeben werden.

Über den Kolben der Federspeicherbremse wird nun aufgrund des vorliegenden Druckes derselbe betätigt und die Kolbenstange wieder eingezogen. Dabei wird gleichzeitig die Feder des Federspeichers wieder zusammengedrückt und entsprechende Federenergie gespeichert. Sobald dieser Vorgang abgelaufen ist, werden gleichzeitig die Kugeln der Verriegelung wieder in die entsprechend komplementären Anformungen geschoben, und die Feststellbremse bleibt verriegelt, also unbetätigt, selbst in dem Falle, wenn auf der Hauptluftleitung die pneumatische Energie abfällt und die Fahrbremsen, nicht jedoch die Feststellbremse betätigen.

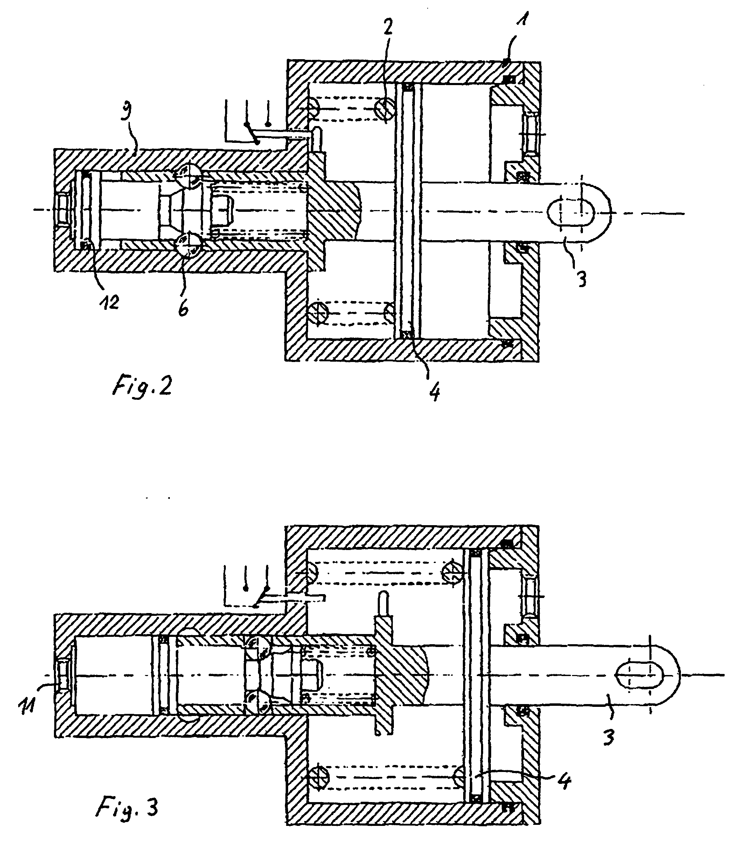

Fig. 2 zeigt nochmals den Zustand der gelösten Bremse, bei der die Verriegelung die Kolbenstange (12) und damit auch Kolben (3) - und Federspeicher in entsprechend gespannter Position festhält.

Fig. 3 zeigt den betätigten Zustand, bei dem zuvor kurz auf den linken Druckmittelanschluß (11) ein pneumatisches Signal gegeben wurde, die Verriegelung gelöst wurde und die Federenergie der großen Druckfeder (2) freisetzt, die den Kolben (4) und die Kolbenstange (3) zur Betätigung der Feststellbremse nach vorne schiebt.

Darüber hinaus ist die Kolbenstange noch mit einer Rückmeldeeinrichtung versehen, über die die Kolbenposition ermittelbar ist.

## Patentansprüche

1. Feststellbremse für Schienenfahrzeuge, insbesondere für Güter- und Personenwagen, mit einer mechanischen Verriegelung zur Verhinderung einer ungewollten Betätigung der Bremse, wobei die Verriegelungselemente im wesentlichen aus einem über dem Betätigungskolben (12) des Verriegelungselementes gegen eine Druckfeder (10) betätigbarer, in Betätigungsrichtung segmentiert ausgeführter Konus (7) bestehen, dass der Konus (7) über einen Teilabschnitt einen rotationssymmetrisch angeordneten Kugelkalottenverlauf aufweist und über einen zweiten Abschnitt konisch ausgebildet ist und die Verriegelung über Kugelelemente (6) erfolgt, die über den Konus (7) betätigbar sind, wobei die Betätigung pneumatisch oder elektrisch derart erfolgt, dass die Energie eines Federspeichers zur Bremsung freisetzbar ist, wobei der Federspeicher als Kolbenzylinderaggregat (1) ausgebildet ist, bei welchem der Kolben (4) samt Kolbenstange (3) in Betätigungsrichtung der Bremse von einer Druckfeder (2) und in Löserichtung der Bremse von einem Druckmittel beaufschlagbar ist,
**dadurch gekennzeichnet,**
**dass** die Verriegelung als Kolben-Zylinder-Aggregat (13) ausgebildet ist und einen kurzhubigen Betätigungskolben (12) enthält, und der Zylinder innerhalb der Kolbenstange (3) des Kolben-Zylinder-Federspeichers angeordnet ist, und
**dass** bei Zuführung elektrischer oder pneumatischer Energie die Verriegelung entriegelt wird.

2. Feststellbremse für Schienenfahrzeuge nach Anspruch 1,
**dadurch gekennzeichnet,**
**daß** im Bereich der Kolbenstange (3) des Kolben-Zylinder-Federspeichers ein Positionsrückmeldeschalter angeordnet ist.

## Claims

1. Parking brake for railway vehicles, in particular for freight and passenger cars, having a mechanical locking mechanism for the prevention of unintentional actuation of the brake, the locking elements substantially consisting of a cone (7) that can be actuated by way of the actuating piston (12) of the locking element in opposition to a compression spring (10) and is constructed in a segmented manner in the direction of actuation, in that over a partial section the cone (7) has the course of a concave dome shape that is arranged in a rotationally symmetrical manner and over a second section is formed conically, and the locking is effected by way of spherical elements (6) which can be actuated by way of the cone (7), with the actuation being effected pneumatically or electrically in such a way that the energy of a spring store can be released for braking purposes, with the spring store being formed as a piston-cylinder unit (1) in which a compression spring (2) can act upon the piston (4) together with the piston rod (3) in the direction of actuation of the brake and a pressure medium can act thereon in the direction of release of the brake, **characterized in that** the locking mechanism is formed as a piston-cylinder unit (13) and contains a short-stroke actuating piston (12), and the cylinder is arranged within the piston rod (3) of the piston-cylinder spring store, and **in that** the locking mechanism is unlocked when electrical or pneumatic energy is supplied.

2. Parking brake for rail vehicles according to claim 1, **characterized in that** a position-status signalling switch is arranged in the region of the piston rod (3) of the piston-cylinder spring store.

## Revendications

1. Frein de stationnement pour véhicules ferroviaires, notamment pour wagons et voitures ferroviaires, comportant un verrouillage mécanique pour empêcher un actionnement inopiné du frein, les éléments de verrouillage étant constitués pour l'essentiel d'un cône (7), réalisé segmenté dans la direction d'actionnement, pouvant être actionné contre l'action d'un ressort (10) de pression au moyen du piston (12) d'actionnement de l'élément de verrouillage, le cône (7) possédant sur un tronçon partiel une forme en calotte sphérique disposée à symétrie de révolution et étant réalisé conique sur un deuxième tronçon, et le verrouillage s'effectuant au moyen d'éléments (6) sphériques qui peuvent être actionnés par l'intermédiaire du cône (7), l'actionnement s'effectuant pneumatiquement ou électriquement de telle sorte que l'énergie d'un ressort accumulateur peut être libérée pour le freinage, le ressort accumulateur étant réalisé sous forme d'ensemble (1) piston-cylindre dont le piston (4), tige (3) de piston comprise, peut être sollicité dans la direction d'actionnement du frein par un ressort (2) de pression et dans la direction de desserrage du frein par un fluide sous pression,
**caractérisé en ce que** le verrouillage est réalisé sous forme d'ensemble (13) piston-cylindre et comporte un piston (12) d'actionnement à course courte, et le cylindre est disposé à l'intérieur de la tige (3) de piston du ressort accumulateur à piston-cylindre, et **en ce que** le verrouillage est déverrouillé lors de l'apport d'énergie électrique ou pneumatique.

2. Frein de stationnement pour véhicules ferroviaires suivant la revendication 1, **caractérisé en ce qu'**un commutateur de rétro-signalisation de position est disposé dans la région de la tige (3) de piston du ressort accumulateur à piston-cylindre.
